# EUROPEAN PATENT SPECIFICATION

(11) **EP 2 615 341 B1**
(45) Date of publication and mention of the grant of the patent: **07.03.2018**
(21) Application number: 11823220.6
(22) Date of filing: 31.08.2011
(51) Int. Cl.: F16K 31/04

(54) **STEPPING MOTOR-DRIVEN CONTROL VALVE**
DURCH EINEN SCHRITTMOTOR ANGETRIEBENES STEUERVENTIL
SOUPAPE DE COMMANDE ENTRAÎNÉE PAR MOTEUR PAS À PAS

(30) Priority: 07.09.2010 JP 2010199800
(43) Date of publication of application: 17.07.2013
(73) Proprietor: TGK CO., Ltd., Tokyo 193-0942 (JP)
(72) Inventor: HIROTA, Hisatoshi, Hachioji-shi Tokyo 193-0942 (JP)
(74) Representative: Schröer, Gernot H.
(86) International application number: PCT/JP2011/004873
(87) International publication number: WO 2012/032739

(56) References cited:
- JP-A- 10 220 616
- JP-A- 2001 153 236
- JP-A- 2003 148 643
- JP-A- 2003 148 643
- JP-A- 2006 242 502
- JP-A- 2006 242 502
- JP-A- 2007 024 186

## Description

### TECHNICAL FIELD

The present invention relates to a stepping motor-driven control valve, and more particularly, to a control valve suitable for use in a vehicle air conditioning system.

### BACKGROUND ART

Recently, in a vehicle with an internal combustion engine, the temperature of cooling water, used as a heat source, is not easily increased to a temperature required for air heating due to improved engine combustion efficiency. In a hybrid vehicle, using an internal combustion engine and an electric motor together, use of such cooling water is even more difficult as an operation rate of the internal combustion engine is lower. In case of an electric vehicle, there is no internal combustion engine as a heat source in the first place. Therefore, a heat-pump type vehicle air conditioning system has been proposed that performs a cycle operation using a refrigerant for providing both cooling and heating, and is capable of heating accompanying dehumidification of the vehicle interior (see, for example, Patent Document 1).

The vehicle air conditioning system described above has a refrigeration cycle that includes a compressor, an external heat exchanger, an evaporator, and an internal heat exchanger, and is capable of switching the functions of the external heat exchanger between heating and cooling operations. During the heating operation, the external heat exchanger functions as an evaporator. In this operation, in a process of refrigerant circulating in the refrigeration cycle, the internal heat exchanger radiates heat, which heats the air inside a vehicle. During the cooling operation, on the other hand, the external heat exchanger functions as a condenser. In this operation, the refrigerant condensed in the external heat exchanger evaporates in the evaporator, and the air inside the vehicle is cooled by the latent heat of vaporization. In this operation, dehumidification is also performed.

When a plurality of evaporators functions in this manner depending on the refrigeration cycle operating state, a ratio among the flow rates of refrigerant that flows in the respective evaporators needs to be regulated. The same can be said when a plurality of condensers functions. Therefore, although a control valve that can electrically regulate the valve-opening degree may be provided at a specific position in the refrigerant circulation passage, in general, a solenoid-driven electromagnetic valve is often used as it provides a larger driving force at a relatively low cost. When an accurate control of the valve-opening degree is particularly required, use of a stepping motor-driven control valve is preferred that is often used in an air conditioning system for houses (see, for example, Patent Document 2). This is because the amount of valve element displacement, and furthermore the valve-opening degree, can be regulated accurately by setting the number of steps (drive pulses).

### CITATION LIST

### PATENT DOCUMENTS

Patent Document 1 : JP 9-240266 A
Patent Document 1 : JP 60-8583 A

JP 2003-148643 A discloses a valve operated by a stepping motor. a rotor shaft is supported by an externally threaded section in a female screw member on one side and by an extension stem part supported by a bearing member. A depending cylindrical part serves as a rotor bearing guide and the bearing member is fitted in the depending part such as to be movable in the axial direction. A spiral guide object formed in the shape of a coil spring surrounds the periphery of the depending cylindrical part.

JP 2006-242502 A discloses a compound valve comprising a stepper motor. An externally threaded section is formed on a rotor shaft of the stepper motor and engages a female screw part formed in a support member. An upper end of the rotor shaft is fitted into a cylindrical bearing member.

### SUMMARY OF THE INVENTION

### PROBLEMS TO BE SOLVED BY THE I NVENTI ON

A vehicle air conditioning system is greatly affected by a vibration during vehicle driving, so unlike an air conditioning system for houses, the environment in which it is installed is unstable. Therefore, in order to ensure rotational stability of the stepping motor and accurate movement of the drive mechanism, an influence of vibration from a vehicle needs to be as small as possible. On the other hand, due to limitations such as of an installation space in a vehicle, it is preferred that a control valve be configured compactly overall even with a relatively large amount of drive at the valve portion.

An object of the present invention is to provide a stepping motor-driven control valve that is insusceptible to a vibration from outside, and preferably, provides a relatively large valve stroke.

### MEANS FOR SOLVING THE PROBLEMS

In order to solve the above problems, a stepping motor-driven control valve according to the invention is defined in claim 1 and includes: a body including a lead-in port through which a refrigerant is introduced from the upstream side, a lead-out port through which the refrigerant is delivered to the downstream side, and a valve hole that connects the lead-in port with the lead-out port; a valve element for opening/closing a valve portion by moving toward and away from the valve hole; a stepping motor including a rotor for driving the valve element in a direction to open/close the valve portion; a shaft that is fixed to the body and extended in an axial direction of the rotor, a helical guide portion that runs on an outer periphery of the shaft along an axial direction thereof; a rotation stopper including an engagement portion that engages along the guide portion and a power transmission portion supported by the rotor, the rotation stopper being configured to be displaced in the axial direction of the shaft with a rotation of the rotor, and to limit the rotation of the rotor by the power transmission portion being stopped at both ends of the shaft; and a valve operating element that is engaged with the rotor and translationally supported in the axial direction as well as screwed into the body, and moves in the open/close direction of the valve portion integrally with the valve element by the rotation of the rotor. Furthermore, the rotor is hollow-shaped and has bearing portions at both ends thereof, and by the shaft running into an internal space of the rotor, the rotation stopper is configured to be displaced within the internal space. The valve operating element is provided with legs that are fitted into guide portions of the rotor, and is arranged such that displacement of the valve operating element relative to the rotor in rotational direction is limited, but displacement of the valve operating element in axial direction along the guide portions of the rotor is allowed.

According to this aspect, by providing bearing portions at both ends of the rotor of the stepping motor, a larger space can be secured between the bearing portions. Accordingly, the rotor can be supported stably even with a vibration from outside. Furthermore, by arranging the shaft in a relatively large internal space formed by placing the bearing portions at both ends of the rotor, a guide portion for supporting the rotation stopper can be extended longer in the axial direction. In other words, a wider range of translation in the axial direction can be secured for the rotation stopper, and consequently, a wider range of stroke in the axial direction can be secured for the valve operating element. In other words, a larger valve element stroke can be secured in the open/close direction.

### EFFECT OF THE INVENTION

The present invention can provide a stepping motor-driven control valve insusceptible to a vibration from outside. Furthermore, a large valve stroke compared to the size of the stepping motor can be provided.

### BRIEF DESCRIPTION OF THE DRAWINGS

Fig. 1 is a system configuration diagram of an outline configuration of a vehicle air conditioning system according to a first embodiment.
Figs. 2(A) to 2(C) are illustrations of operations of the vehicle air conditioning system.
Fig. 3 is a sectional view of a specific configuration of a flow control valve.
Figs. 4(A) and 4(B) are partially enlarged views of Fig. 3.
Fig. 5 is an illustration of the flow control valve in an operating state.
Fig. 6 is an illustration of the flow control valve in an operating state.
Fig. 7 is a graph of the control state and the valve-opening degree of the flow control valve.
Fig. 8 is a sectional view of a specific configuration of a compound valve according to a second embodiment.

### MODE FOR CARRYING OUT THE INVENTION

Embodiments of the present invention are described in details herein by referring to the drawings.

### [First Embodiment]

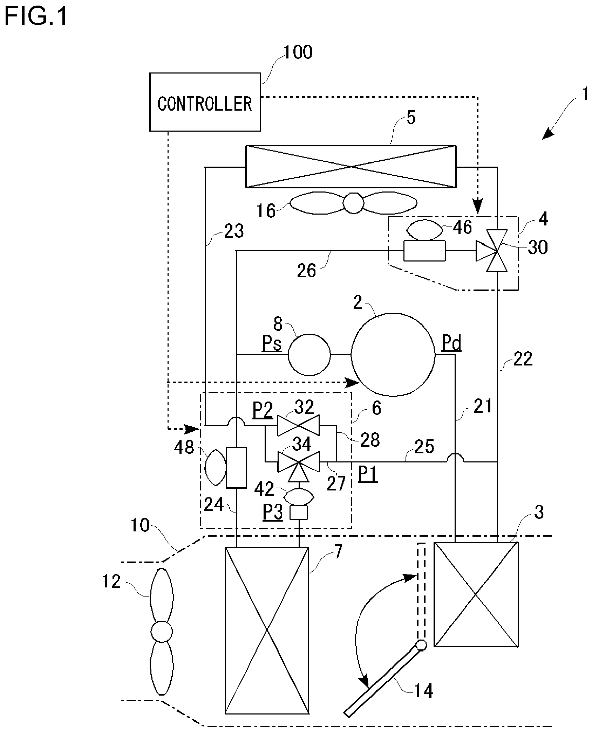

First, a first embodiment of the present invention is described herein. Fig. 1 is a system configuration diagram of an outline configuration of a vehicle air conditioning system according to the first embodiment. In this embodiment, a vehicle air conditioning system of the present invention is embodied as an air conditioning system for an electric vehicle.

A vehicle air conditioning system 1 includes a refrigeration cycle (refrigerant circulation circuit) in which a compressor 2, an internal condenser 3, a first control valve unit 4, an external heat exchanger 5, a second control valve unit 6, an evaporator 7 and an accumulator 8 are coupled with a pipe. The vehicle air conditioning system 1 is configured as a heat-pump type vehicle air conditioning system for air-conditioning a vehicle interior by using heat of refrigerant, in a process of a refrigerant or hydrofluorocarbon (HFC-134a) circulating in the refrigeration cycle while changing phases. In the refrigerant circulation circuit, various control valves are disposed for appropriately controlling the air conditioning.

The vehicle air conditioning system 1 is operated by switching among a plurality of refrigerant circulation passages between the cooling operation and the heating operation. In this refrigeration cycle, the internal condenser 3 and the external heat exchanger 5 are configured in series to be operable as a condenser, and the evaporator 7 and the external heat exchanger 5 are configured in parallel to be operable as an evaporator. In other words, a first refrigerant circulation passage in which the refrigerant circulates during the heating (dehumidification) operation, a second refrigerant circulation passage in which the refrigerant circulates during the heating and defrosting operations, and a third refrigerant circulation passage in which the refrigerant circulates during the cooling operation are formed.

The first refrigerant circulation passage is a passage in which the refrigerant circulates as follows: the compressor 2 → the internal condenser 3 → the second control valve unit 6 → the evaporator 7 → the second control valve unit 6 → the accumulator 8 → the compressor 2. The second refrigerant circulation passage is a passage in which the refrigerant circulates as follows: the compressor 2 → the internal condenser 3 → the second control valve unit 6 → the external heat exchanger 5 → the first control valve unit 4 → the accumulator 8 → the compressor 2. The third refrigerant circulation passage is a passage in which the refrigerant circulates as follows: the compressor 2 → the internal condenser 3 → the first control valve unit 4 → the external heat exchanger 5 → the second control valve unit 6 → the evaporator 7 → the second control valve unit 6 → the accumulator 8 → the compressor 2. The flow of refrigerant through the external heat exchanger 5 is reversed between when the second refrigerant circulation passage is opened and when the third refrigerant circulation passage is opened. Thus, an inlet and an outlet for the refrigerant in the external heat exchanger 5 are switched between when the second refrigerant circulation passage is opened and when the third refrigerant circulation passage is opened.

Specifically, a discharge chamber of the compressor 2 is coupled with an inlet of the internal condenser 3 via a first passage 21, and an outlet of the internal condenser 3 is coupled with one inlet/outlet of the external heat exchanger 5 via a second passage 22. The other inlet/outlet of the external heat exchanger 5 is coupled with an inlet of the evaporator 7 via a third passage 23, and an outlet of the evaporator 7 is coupled with an inlet of the accumulator 8 via a fourth passage 24 (return passage). Then, the second passage 22 branches off at two points, i.e., a diverging point closer to the internal condenser 3 and a diverging point closer to the external heat exchanger 5, to a bypass passage 25 and a bypass passage 26, respectively. The diverging point closer to the external heat exchanger 5 is provided in an internal passage of the first control valve unit 4, and a selector valve 30, described later, is disposed at the diverging point.

The downstream side of the bypass passage 25 branches off to a first branch passage 27 and a second branch passage 28. The first branch passage 27 and the second branch passage 28 are formed as internal passages of the second control valve unit 6. The first branch passage 27 is coupled with the evaporator 7 via the third passage 23, and the second branch passage 28 is coupled with the external heat exchanger 5 via the third passage 23. A flow control valve 32, described later, is provided in the second branch passage 28. A selector valve 34, described later, is disposed at a connection point of the third passage 23 and the first branch passage 27, and a supercooling control valve 42, described later, is disposed between the selector valve 34 and the evaporator 7.

The first refrigerant circulation passage is configured by connecting the first passage 21, the second passage 22, the bypass passage 25, the first branch passage 27, and the fourth passage 24. The second refrigerant circulation passage is configured by connecting the first passage 21, the second passage 22, the bypass passage 25, the second branch passage 28, the third passage 23, and the bypass passage 26. The third refrigerant circulation passage is configured by connecting the first passage 21, the second passage 22, the third passage 23, and the fourth passage 24. In order to realize switching among refrigerant circulation passages in this manner, the first control valve unit 4 is provided to a connection area of the internal condenser 3 and the external heat exchanger 5, and the second control valve unit 6 is provided to a connection area of the internal condenser 3, the external heat exchanger 5 and the evaporator 7.

The vehicle air conditioning system 1 includes a duct 10 in which a heat exchange of air is performed. From the upstream side of air flow in the duct 10, an internal blower 12, the evaporator 7, and the internal condenser 3 are disposed. An air mix door 14 is rotatably provided in the upstream side of the internal condenser 3, and regulates the ratio between the air flow passing through the internal condenser 3 and the air flow bypassing the internal condenser 3. An external blower 16 is arranged to face the external heat exchanger 5.

The compressor 2 is configured as an electric compressor which houses a motor and a compression mechanism within the housing, is driven by current supplied from a battery (not shown), and changes the amount of refrigerant discharged according to the number of rotations of the motor. Various types of compressors including a reciprocal type, a rotary type and a scroll type can be used as the compressor 2, although a description is omitted here because an electric compressor itself is publicly known.

The internal condenser 3 is provided in the vehicle interior, and functions as an auxiliary condenser for radiating heat from the refrigerant, separately from the external heat exchanger 5. In other words, heat is radiated from a high-temperature and high-pressure refrigerant discharged from the compressor 2 when the refrigerant passes through the internal condenser 3. Heat exchange of the air, which has been divided according to the opening position of the air mix door 14, is performed when the air passes through the internal condenser 3.

The external heat exchanger 5 is arranged outside the vehicle interior. During the cooling operation, the external heat exchanger 5 functions as an external condenser for radiating heat from the refrigerant passing inside. During the heating operation, the external heat exchanger 5 functions as an external evaporator for evaporating the refrigerant passing inside. The external blower 16 is a suction type blower that introduces outside air by rotary driving an axial flow fan by motor. The external heat exchanger 5 allows the heat exchange to occur between the outside air and the refrigerant.

The evaporator 7 is arranged within the vehicle interior and functions as an internal evaporator that evaporates the refrigerant passing inside. In other words, the refrigerant is decreased in temperature and pressure by passing through the control valve which functions as an expansion device, and evaporates when passing through the evaporator 7. Air introduced from the upstream side of the duct 10 is cooled by the latent heat of vaporization. At that time, the cooled and dehumidified air is divided into air that passes through the internal condenser 3 and air that bypasses the internal condenser 3, according to the opening position of the air mix door 14. The air passing through the internal condenser 3 is heated in the process of passing. On the downstream side of the internal condenser 3, the air that has passed through the internal condenser 3 and the air that has bypassed the internal condenser 3 are mixed together and regulated to a target temperature, and supplied into a vehicle interior through an air outlet (not shown). For example, the air is blown out from outlets such as a vent air outlet, a foot air outlet, and a defroster air outlet into a predetermined place within a vehicle interior.

The accumulator 8 is an apparatus for accumulating the refrigerant discharged from the evaporator in a vapor-liquid separated manner, and therefore has a liquid phase area and a vapor phase area. Therefore, even if a liquid refrigerant exceeding an expected amount is derived from the upstream side, the liquid refrigerant can be accumulated in the liquid phase area, and the refrigerant in the vapor phase area can be derived to the compressor 2. Consequently, the compression operation of the compressor 2 is not hindered. Meanwhile, in this embodiment, a part of the refrigerant in the liquid phase area can be supplied to the compressor 2 so that a required amount of lubricant oil can be returned to the compressor 2.

The first control valve unit 4 includes the selector valve 30 and a superheating control valve 46. The selector valve 30 includes a three-way solenoid valve having a first valve portion for opening/closing the second passage 22, a second valve portion for opening/closing the bypass passage 26, and a solenoid for driving each valve portion. The first valve portion, when opened, allows a flow of refrigerant from the internal condenser 3 to the external heat exchanger 5 via the second passage 22. The second valve portion, when opened, allows a flow of refrigerant from the external heat exchanger 5 to the accumulator 8 via the bypass passage 26. In this embodiment, an on-off valve is used as the selector valve 30 for opening either the first valve portion or the second valve portion depending on the existence of electric current to the solenoid. An actuator for driving the valve portion of the selector valve 30 does not have to be a solenoid, but can also be an electric motor such as a stepping motor.

When the external heat exchanger 5 functions as an external evaporator, the superheating control valve 46 functions as an "evaporating pressure regulator valve" that regulates the evaporating pressure thereof. When the degree of superheating occurs on the outlet side, the superheating control valve 46 controls the flow of refrigerant so that the degree of superheating nears a predetermined constant degree of superheating (a predetermined degree of superheating SH). In this embodiment, as the superheating control valve 46, a mechanical control valve is used which has a temperature sensing means for driving the valve portion by detecting the temperature and pressure of the refrigerant on the outlet side (downstream of the superheating control valve 46).

The superheating control valve 46 throttles the valve-opening degree when the degree of superheating detected is larger than the predetermined degree of superheating SH. By increasing the evaporating pressure of the external heat exchanger 5, the amount of heat exchanged between the refrigerant passing through the external heat exchanger 5 and the outside air is decreased, and accordingly, the degree of superheating is decreased to near the predetermined degree of superheating SH. Conversely, when the degree of superheating detected is smaller than the predetermined degree of superheating SH, the superheating control valve 46 increases the valve-opening degree. By decreasing the evaporating pressure of the external heat exchanger 5, the amount of heat exchanged between the refrigerant passing through the external heat exchanger 5 and the outside air is increased, and accordingly, the degree of superheating is increased to near the predetermined degree of superheating SH. In this manner, the superheating control valve 46 operates autonomously to make the degree of superheating on the outlet side closer to the predetermined degree of superheating SH. In this embodiment, the predetermined degree of superheating is set to be equal for the superheating control valve 46 and a superheating control valve 48, which can be set differently as well.

Although not shown, the superheating control valve 46, for example, may have an inlet port through which the refrigerant is introduced from the upstream side, an outlet port through which the refrigerant is derived to the downstream side, a body provided with a valve hole that communicates the inlet port with the outlet port, a valve actuation unit including a valve element for regulating the valve-opening degree by moving toward and away from the valve hole, and a temperature sensing means. The temperature sensing means detects the temperature and pressure of the refrigerant flowing in the internal passage on the outlet port side (downstream of the valve portion) to open/close the valve element so that the degree of superheating becomes the predetermined degree of superheating on the outlet side of the superheating control valve 46 (downstream of the valve portion).

In the meantime, the second control valve unit 6 includes the flow control valve 32, the supercooling control valve 42, the superheating control valve 48, and the selector valve 34. The selector valve 34 is provided at the meeting point of the first branch passage 27 and the third passage 23. The selector valve 34 includes a mechanical three-way valve which can switch the flow passage by opening either the first valve portion for opening/closing the first branch passage 27 or the second valve portion for opening/closing the third passage 23. The first valve portion, when opened, allows a flow of refrigerant from the internal condenser 3 to the evaporator 7 via the bypass passage 25 and the first branch passage 27. The second valve portion, when opened, allows a flow of refrigerant from the external heat exchanger 5 to the evaporator 7 via the third passage 23.

The flow control valve 32 is provided in the second branch passage 28. The flow control valve 32 is configured as a proportional valve which is autonomously regulated to a predetermined opening degree corresponding to the current value supplied to the actuator. In this embodiment, a stepping motor is used as an actuator for driving the valve portion of the flow control valve 32. The actuator may also be a solenoid. The flow control valve 32 is basically regulated to a full-open state, a large-diameter regulated state, a small-diameter regulated state, or a closed state. The large-diameter regulated state is a state in which the opening degree is large but smaller than a full-open state, and the small-diameter regulated state is a state in which the opening degree is small but not in a closed state.

The flow control valve 32 also functions as an expansion device in the small-diameter regulated state. During the heating operation, the opening degree of the flow control valve 32 (or the opening degree of the second branch passage 28) is regulated. Therefore, a flow rate of refrigerant supplied to the external heat exchanger 5 is regulated depending on the opening degree of the flow control valve 32. In other words, the flow control valve 32 functions as a flow regulating valve that regulates a ratio between the flow rate of refrigerant flowing from the internal condenser 3 to the external heat exchanger 5, and the flow rate of refrigerant flowing from the internal condenser 3 to the evaporator 7.

The supercooling control valve 42 functions as an "expansion device" that throttles and expands the refrigerant derived from the external heat exchanger 5 and the refrigerant supplied via the bypass passage 25, and derives the refrigerant to the side of the evaporator 7. During the cooling operation, the supercooling control valve 42 controls the flow of refrigerant so that the degree of supercooling on the outlet side of the external heat exchanger 5 nears a predetermined constant degree of supercooling (a predetermined value SC). During the heating operation, the flow of refrigerant is controlled so that the degree of supercooling on the outlet side of the internal condenser 3 comes close to the predetermined constant degree of supercooling (a predetermined value SC). In this embodiment, as the supercooling control valve 42, a mechanical control valve is used which has a temperature sensing means for driving the valve portion by detecting the temperature and pressure of the refrigerant on the upstream side (outlet side of the external heat exchanger 5 during the cooling operation, and outlet side of the internal condenser 3 during heating the operation (a specific heating operation with dehumidification control)).

During the cooling operation, the supercooling control valve 42 operates in the valve-opening direction when the degree of supercooling on the outlet side of the external heat exchanger 5 is larger than the predetermined value SC, and increases the flow rate of refrigerant flowing in the external heat exchanger 5. When the flow rate of refrigerant is increased in this manner, the condensation capacity per refrigerant unit flow rate is decreased in the external heat exchanger 5, and the degree of supercooling changes in the direction to become smaller. Conversely, when the degree of supercooling on the outlet side of the external heat exchanger 5 becomes smaller than the predetermined value SC, the supercooling control valve 42 operates in the valve-closing direction, and decreases the flow rate of refrigerant flowing in the external heat exchanger 5. When the flow rate of refrigerant is decreased in this manner, the condensation capacity per refrigerant unit flow rate is increased in the external heat exchanger 5, and the degree of supercooling changes in the direction to become larger. The supercooling control valve 42 operates autonomously so that the degree of supercooling reaches the predetermined value SC at the inlet (the outlet side of the external heat exchanger 5).

When the bypass passage 25 is opened during a specific heating operation, the supercooling control valve 42 operates in the valve-opening direction when the degree of supercooling becomes larger than the predetermined value SC on the outlet side of the internal condenser 3, and increases the flow rate of refrigerant flowing in the internal condenser 3. When the flow rate of refrigerant is increased in this manner, the condensation capacity per refrigerant unit flow rate is decreased in the internal condenser 3, and the degree of supercooling changes in the direction to become smaller. Conversely, when the degree of supercooling on the outlet side of the internal condenser 3 becomes smaller than the predetermined value SC, the supercooling control valve 42 operates in the valve-closing direction, and decreases the flow rate of refrigerant flowing in the internal condenser 3. When the flow rate of refrigerant is decreased in this manner, the condensation capacity per refrigerant unit flow rate is increased in the internal condenser 3, and the degree of supercooling changes in the direction to become larger. The supercooling control valve 42 operates autonomously so that the degree of supercooling reaches the predetermined value SC at the inlet (the outlet side of the internal condenser 3).

Although not shown, the supercooling control valve 42 may have an inlet port through which the refrigerant is introduced from the upstream side, an outlet port through which the refrigerant is derived to the downstream side, a body provided with a valve hole that communicates the inlet port and the outlet port, a valve element that regulates the valve-opening degree by moving toward and away from the valve hole, and a temperature sensing means for opening/closing the valve element by detecting the temperature and pressure of the refrigerant introduced through the inlet port so that the degree of supercooling on the outlet side of the external heat exchanger 5 reaches the predetermined value.

When the degree of superheating occurs on the outlet side, the superheating control valve 48 controls the flow of refrigerant so that the degree of superheating nears a predetermined constant degree of superheating (a predetermined degree of superheating SH). In this embodiment, as the superheating control valve 48, a mechanical control valve is used which has a temperature sensing means for driving the valve portion by detecting the temperature and pressure of the refrigerant on the outlet side (downstream of the superheating control valve 48). The superheating control valve 48 throttles the valve-opening degree when the degree of superheating detected is larger than the predetermined degree of superheating SH. By increasing the evaporating pressure of the evaporator 7, the amount of heat exchanged between the refrigerant passing through the evaporator 7 and the outside air decreases, and accordingly, the degree of superheating is decreased to near the predetermined degree of superheating SH. Conversely, when the degree of superheating detected is smaller than the predetermined degree of superheating SH, the superheating control valve 48 increases the valve-opening degree. By decreasing the evaporating pressure of the evaporator 7, the amount of heat exchanged between the refrigerant passing through the evaporator 7 and the outside air is increased, and accordingly, the degree of superheating is increased to near the predetermined degree of superheating SH. In this manner, the superheating control valve 48 operates autonomously to make the degree of superheating on the outlet side closer to the predetermined degree of superheating SH.

Although not shown, the superheating control valve 48, for example, may have an inlet port through which the refrigerant is introduced from the upstream side, an outlet port through which the refrigerant is derived to the downstream side, a body provided with a valve hole that communicates the inlet port and the outlet port, a valve actuation unit including a valve element for regulating the valve-opening degree by moving toward and away from the valve hole, and a temperature sensing means for detecting the temperature and pressure of the refrigerant flowing in the internal passage on the outlet port side to open/close the valve element so that the degree of superheating becomes the predetermined degree of superheating on the outlet side of the superheating control valve 48 (downstream of the valve portion).

The vehicle air conditioning system 1 configured as above is controlled by a controller 100. The controller 100 includes a CPU for executing various arithmetic processing, a ROM for storing various control programs, a RAM used as a work area for storing data and executing a program, and an input/output interface. To the controller 100, a signal is input from various sensors and switches, not shown, installed in the vehicle air conditioning system 1. To realize a room temperature set by a vehicle occupant, the controller 100 calculates the amount of control of each actuator, and outputs a control signal to a driver circuit of each actuator. In addition to the open/close control of the selector valve 30 and the flow control valve 32, the controller 100 executes the drive control of the compressor 2, the internal blower 12, the external blower 16, and the air mix door 14.

The controller 100 determines a set opening degree of the flow control valve 32 based on predetermined external information detected by various sensors, such as the temperature of vehicle interior and exterior and the temperature of air blown out of the evaporator 7, and outputs a control pulse signal to the stepping motor so that the opening degree becomes the set opening degree. With such a control, as shown in the figure, the compressor 2 introduces the refrigerant of the inlet pressure Ps via the inlet chamber, and compresses and discharges the refrigerant as the refrigerant of the discharge pressure Pd.

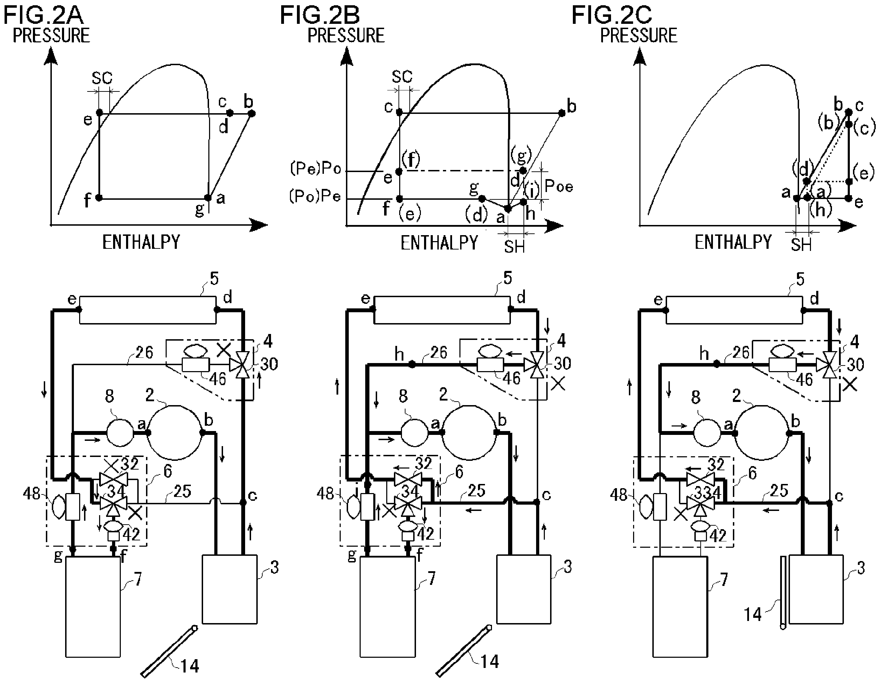

Next, the operation of the refrigeration cycle according to this embodiment is explained herein. Figs. 2(A) to 2(C) are illustrations of the operations of the vehicle air conditioning system. Fig. 2(A) is an illustration of the condition during the cooling operation, Fig. 2(B) is an illustration of the condition during a specific heating operation, and Fig. 2(C) is an illustration of the condition during the defrosting operation. The "specific heating operation" is an operating state with an enhanced dehumidification function in the heating operation.

At the top of each figure, there is a Mollier diagram illustrating the operation of the refrigeration cycle. The horizontal axis represents the enthalpy and the vertical axis represents the pressures. At the bottom of each figure, the operating state of the refrigeration cycle is shown. In the figure, heavy lines and arrows represent the flow of refrigerant, and reference signs a to i correspond to those in the Mollier diagram. The "×" mark in the figure indicates that the flow of refrigerant is shut off.

As in Fig. 2(A), during the cooling operation, the first valve portion of the selector valve 30 is opened and the second valve portion thereof is closed in the first control valve unit 4. In the meantime, in the second control valve unit 6, the flow control valve 32 is in a closed state. At this time, in the selector valve 34, a differential pressure across the valve (P1-P2) becomes smaller than a predetermined differential pressure ΔPset, so the first valve portion changes to the closed state (the second valve portion changes to the opened state), and the refrigerant derived from the internal condenser 3 is now led to the external heat exchanger 5. At this time, the external heat exchanger 5 functions as an external condenser. In other words, the refrigerant discharged from the compressor 2 circulates in the third refrigerant circulation passage via the internal condenser 3, the selector valve 30, the external heat exchanger 5, the selector valve 34, the supercooling control valve 42, the evaporator 7, the superheating control valve 48, and the accumulator 8, and returns to the compressor 2.

In other words, a high-temperature and high-pressure gaseous refrigerant discharged from the compressor 2 is condensed by passing through the internal condenser 3 and the external heat exchanger 5. Then, the refrigerant having passed through the external heat exchanger 5 passes through a second valve portion 312 of the selector valve 34, adiabatically-expanded at the supercooling control valve 42, and is introduced into the evaporator 7 as a low-temperature and low-pressure gas-liquid two-phase refrigerant. At this time, the supercooling control valve 42 autonomously regulates the opening degree of the valve portion so that the degree of supercooling on the outlet side (point e) of the external heat exchanger 5 becomes the predetermined value SC. The refrigerant introduced into the inlet of the evaporator 7 evaporates in the process of passing through the evaporator 7, and cools the air in the vehicle interior.

As in Fig. 2(B), during the specific heating operation, in the first control valve unit 4, the second valve portion of the selector valve 30 is opened to release the bypass passage 26, while in the second control valve unit 6, the opening degree of the flow control valve 32 is controlled. At this time, in the selector valve 34, a differential pressure across the valve (P1-P2) becomes larger than the predetermined differential pressure ΔPset. Therefore, the first valve portion changes to the opened state (the second valve portion changes to the closed state), and a part of the refrigerant derived from the internal condenser 3 is now led to the evaporator 7. In other words, by regulating the opening degree with a small-diameter control of the flow control valve 32, the flow rate of refrigerant flowing to the evaporator 7 and the external heat exchanger 5 is regulated. At this time, the external heat exchanger 5 functions as an external evaporator. In other words, the refrigerant discharged from the compressor 2 circulates in the first refrigerant circulation passage via the internal condenser 3, the first valve portion of the selector valve 34, the supercooling control valve 42, the evaporator 7, the superheating control valve 48, and the accumulator 8, and returns to the compressor 2. On the other hand, the refrigerant discharged from the compressor 2 also circulates in the second refrigerant circulation passage via the internal condenser 3, the flow control valve 32, the external heat exchanger 5, the selector valve 30, the superheating control valve 46, and the accumulator 8, and returns to the compressor 2.

In other words, a high-temperature and high-pressure gaseous refrigerant discharged from the compressor 2 is condensed by passing through the internal condenser 3. Then, a part of the refrigerant derived from the internal condenser 3 is adiabatically-expanded in the flow control valve 32, becomes a low-temperature and low-pressure gas-liquid two-phase refrigerant, and is supplied to the external heat exchanger 5 and evaporates therein. Then, the remaining part of the refrigerant derived from the internal condenser 3 is adiabatically-expanded in the supercooling control valve 42, becomes a low-temperature and low-pressure gas-liquid two-phase refrigerant, and is supplied to the evaporator 7 and evaporates therein. At this time, the ratio of evaporation between both evaporators, i.e., the external heat exchanger 5 and the evaporator 7, is controlled depending on the opening degree of the flow control valve 32. Accordingly, the amount of evaporation and the dehumidification function can be secured in the evaporator 7. On the other hand, the flow rate of refrigerant supplied to the evaporator 7 is regulated by the supercooling control valve 42 so that the degree of supercooling on the outlet side of the internal condenser 3 becomes the predetermined value SC.

In this specific heating operation, the dehumidification operation is satisfactorily performed, and an outline of the dehumidification control is described herein. In other words, as in Fig. 2(B), by the supercooling control valve 42 maintaining the predetermined degree of supercooling SC at the outlet of the internal condenser 3 (point c), the condensation capacity of the internal condenser 3 is properly maintained, and an efficient heat exchange is performed in each of the external heat exchanger 5 (external evaporator) and the evaporator 7 (internal evaporator). At this time, since the refrigerant state at the inlet of the compressor 2 is always maintained to be on the saturated vapor pressure curve by the accumulator 8 (point a), the state of refrigerant at the outlet of the evaporator 7 (point g) changes to balance with the state of refrigerant at the outlet of the superheating control valve 46 (point h).

In other words, as shown in the figures, in the case where the degree of superheating occurs on the outlet side of the superheating control valve 46, the humidity of the refrigerant at the outlet of the evaporator 7 (point g) is balanced with the degree of superheating of refrigerant at the outlet of the superheating control valve 46 (point h). Conversely, in the case where the degree of superheating occurs on the outlet side of the superheating control valve 48, the humidity at the outlet of the external heat exchanger 5 (point d) is balanced with the degree of superheating on the outlet side of the superheating control valve 48 (point i).

As in Fig. 2(C), during the defrosting operation, in the first control valve unit 4, the second valve portion of the selector valve 30 is opened to release the bypass passage 26, while in the second control valve unit 6, the flow control valve 32 is opened. At this time, a large-diameter control is executed to the flow control valve 32. As a result, a high-temperature and high-pressure gaseous refrigerant (hot gas) discharged from the compressor 2 passes through the flow control valve 32 and is supplied to the external heat exchanger 5. When the defrosting operation is stable, as shown with solid lines in the figure, the refrigerant derived from the external heat exchanger 5 is controlled to be on the saturated vapor line by being introduced into the accumulator 8 (point a). On the other hand, in the case where the degree of superheating occurs on the outlet side of the superheating control valve 46 due to insufficiency of liquid refrigerant in the accumulator 8, as shown with a dotted line in the figure, the superheating control valve 46 regulates the flow of refrigerant so that the degree of superheating comes close to the predetermined degree of superheating SH (point h).

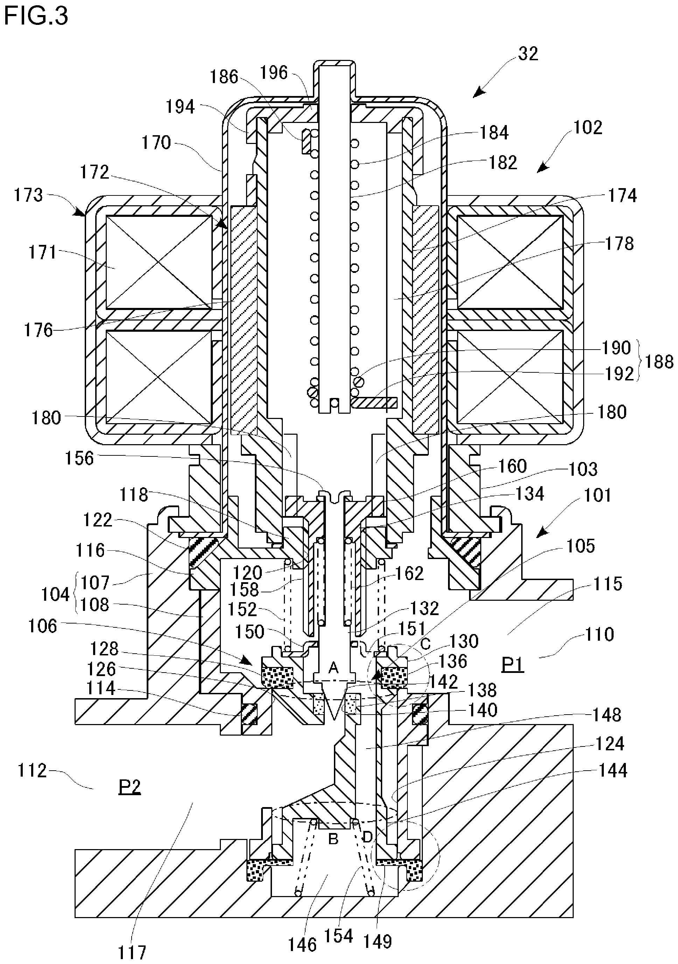

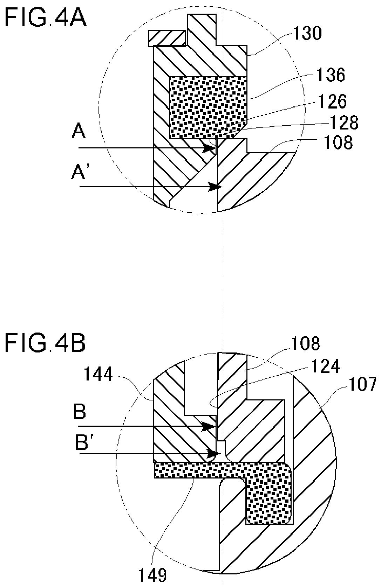

Next, a specific configuration of the flow control valve is explained herein. Fig. 3 is a sectional view illustrating a specific configuration of the flow control valve. Figs. 4(A) and 4(B) are partially enlarged views of Fig. 3. (A) is an enlarged view of an area C of Fig. 3, and (B) is an enlarged view of an area D of Fig. 3.

As in Fig. 3, the flow control valve 32 is configured as a stepping motor-driven electric-operated valve, and is configured so that a valve main unit 101 and a motor unit 102 are coupled through a connecting member 103. The valve main unit 101 is configured to concentrically house a small-diameter first valve 105 (for opening/closing the first valve portion) and a large-diameter second valve 106 (for opening/closing the second valve portion) in a bottomed cylindrical body 104.

The body 104 is configured by concentrically fitting a resin second body 108 into a metallic first body 107. A lead-in port 110 is provided on a lateral side of the first body 107, and a lead-out port 112 is provided on the other lateral side. The lead-in port 110 communicates with the upstream side of the second branch passage 28 (on the side of the bypass passage 25), while the lead-out port 112 communicates with the downstream side of the second branch passage 28 (on the side of the third passage 23) (see Fig. 1).

The second body 108 has a stepped cylindrical body with a diameter reduced toward the bottom, and is forcibly inserted into the first body 107 in a concentric manner. On the second body 108, a connecting hole is provided in a surface facing the lead-in port 110 and a surface facing the lead-out port 112, each for communicating inside with outside. An O-ring 114 is disposed to seal the vicinity of the connecting holes.

Between the second body 108 and the connecting member 103, a discoidal compartment member 116 is disposed. The compartment member 116 is supported by an outer periphery thereof being sandwiched between the connecting member 103 and the second body 108, and divides inside of the valve main unit 101 and inside of the motor unit 102. At the center of the compartment member 116, a circular boss-shaped bearing portion 118 is provided. A female thread portion 120 is provided on the inner periphery of the bearing portion 118, and the outer periphery functions as a sliding bearing. A ring-shaped seal member 122 is installed between the connecting member 103 and the compartment member 116. The second body 108 has a reduced diameter for the lower half portion. The inner periphery of the lower half portion forms a guide hole 124, and the upper end forms a valve hole 126 (corresponding to the "second valve hole"). The edge of the opening at the top of the valve hole 126 forms a valve seat 128 (corresponding to the "second valve seat").

Inside the body 104, a large-diameter valve element 130 (corresponding to the "second valve element"), a small-diameter valve element 132 (corresponding to the "first valve element") and a valve operating element 134 are disposed in a concentric manner. The valve element 130 opens/closes the large-diameter second valve portion by moving toward and away from the valve hole 126 on the upstream side. A valve member 136, which is a ring-shaped elastic body (for example, rubber), is fitted to the outer periphery of the valve element 130, and the second valve portion can be completely closed by the valve member 136 seating on the valve seat 128. A stepped through hole is provided at the center of the valve element 130 in the axial direction, and into an upper end opening thereof, a ring-shaped valve seat forming member 138 is forcibly inserted.

A valve hole 140 (corresponding to the "first valve hole") is formed by the inner periphery of the valve seat forming member 138, and the edge of the opening at the top forms the valve seat 142 (corresponding to the "first valve seat"). The valve seat forming member 138 is a metallic body (for example, stainless steel), and the first valve portion can be closed by the valve element 132 seating on the valve seat 142. As shown in the figure, a high-pressure chamber 115 that communicates with the lead-in port 110 is formed upstream of the valve hole 126 and the valve hole 140, and a low-pressure chamber 117 that communicates with the lead-out port 112 is formed downstream of the valve hole 126 and the valve hole 140.

To the valve element 130, a compartment portion 144 is provided in a linked manner via a diameter-reduced portion. The compartment portion 144 is arranged in the low-pressure chamber 117. The lower end of the compartment portion 144 is slidably supported by the guide hole 124, which ensures a stable movement of the valve element 130 in the open/close direction. A back-pressure chamber 146 is formed between the compartment portion 144 and the bottom of the body 104. A communication passage 148, which penetrates through the valve element 130 and the compartment portion 144, is formed to communicate the high-pressure chamber 115 with the back-pressure chamber 146. Accordingly, the back-pressure chamber 146 is always filled with an upstream pressure P1 introduced from the lead-in port 110.

In this embodiment, an effective diameter A of the valve hole 126 and an effective diameter B of the guide hole 124 are set to be equal (because an effective pressure-receiving area of the valve element 130 and an effective pressure-receiving area of the compartment portion 144 are set to be substantially the same), an influence of the upstream pressure P1 acting on the valve element 130 is cancelled. Especially, in order to precisely realize the pressure cancellation, to the lower part of the compartment portion 144 in the back-pressure chamber 146, a pressure-receiving regulation member 149 is disposed for increasing an effective pressure-receiving area by closely contacting with the compartment portion 144 when the second valve portion is in the closed state. The pressure-receiving regulation member 149 is a ring-shaped thin elastic body (for example, rubber), with a thick portion of the outer periphery thereof being sandwiched between the first body 107 and the second body 108.

In other words, as shown in Fig. 4(A), an effective pressure-receiving area of the valve element 130 is set to correspond to an effective diameter A of the valve hole 126. As shown in the figure, however, in a completely-sealed condition in which the valve member 136 is seated on the valve seat 128, an actual effective pressure-receiving diameter A' is slightly larger than an effective diameter A of the valve hole 126 depending on the nature of the elastic body (see a long dashed double-short dashed line in the figure). To deal with this, as shown in Fig. 4(B), by allowing the pressure-receiving regulation member 149 to come into close contact with the underside of the compartment portion 144 when completely sealed, an effective pressure-receiving diameter B' on the side of the back-pressure chamber 146 is made to be slightly larger than an effective diameter B of the guide hole 124 (corresponding to a long dashed double-short dashed line in the figure). In this manner, a perfect pressure cancellation is realized by making the effective pressure-receiving area of the valve element 130 and the effective pressure-receiving area of the compartment portion 144 equal.

Back to Fig. 3, a discoidal spring bearing member 150 is provided on the upper end of the valve element 130. The spring bearing member 150 is provided with a connecting hole 151 through which the refrigerant passes. Between the spring bearing member 150 and the compartment member 116, a spring 152 (corresponding to an "urging member") is installed for urging the valve element 130 in the valve-closing direction. Meanwhile, between the compartment portion 144 and the body 104, a spring 154 (corresponding to an "urging member") is installed for urging the valve element 130 in the valve-opening direction via the compartment portion 144. In this embodiment, the load of the spring 152 is set to be larger than the load of the spring 154.

The valve element 132 forms a stepped cylindrical shape, and the lower half portion thereof penetrates through the spring bearing member 150 and is arranged to face the valve hole 140, while the upper half portion is supported by the valve operating element 134. The valve element 132 is configured to be a so-called needle valve element, with a pointed tip thereof insertable to and removable from the valve hole 140. Then, the first valve portion is opened/closed by the valve element 132 attached to and detached from the valve seat 142. The upper end of valve element 132 penetrates through the valve operating element 134, and the tip is crimped outward to form a stopper 156.

The valve operating element 134 forms a stepped cylindrical shape, with a male thread portion 158 formed on the outer periphery thereof. The male thread portion 158 screws with the female thread portion 120 of the bearing portion 118. At the upper end of the valve operating element 134, a plurality of legs 160 (four in this embodiment) is provided that extends outward in the radius direction, and fits into the rotor of the motor unit 102. Between the valve operating element 134 and the valve element 132, a spring 162 is installed for urging the valve element 132 in the valve-closing direction. In a normal condition, as shown in the figure, the valve element 132 is urged downward by the spring 162 while a stopper 156 of the valve element 132 is stopped to the upper end of the valve operating element 134. Therefore, the valve element 132 is positioned to be at the lowest relative to the valve operating element 134.

The valve operating element 134 rotates by receiving the rotational driving force of the motor unit 102, and converts a rotative force into a translational force. In other words, when the valve operating element 134 rotates, the valve operating element 134 is displaced in the axial direction by a screw mechanism, and drives the valve element 132 in the open/close direction. When the first valve portion is open, the valve element 132 and the valve operating element 134 operate integrally. In this embodiment, as shown in the figure, the first valve portion is designed to be in the closed state at a limit position (bottom dead center) in the valve-closing direction within the range the valve operating element 134 can move. Even if the valve element 132 is seated on the valve seat 142 and the first valve portion is in the closed state before the valve operating element 134 is positioned at the bottom dead center due to an assembly error or the like, there is no problem because the valve element 132 can be displaced relative to the valve operating element 134 against an urging force of the spring 162.

On the other hand, the motor unit 102 is configured as a stepping motor including a rotor 172 and a stator 173. The motor unit 102 is configured to rotatably support the rotor 172 inside a bottomed cylindrical sleeve 170. On the outer periphery of the sleeve 170, a stator 173 that houses an exciting coil 171 is provided. The lower end opening of the sleeve 170 is coupled with the body 104 via the connecting member 103, and configures the body of the flow control valve 32 together with the body 104.

The rotor 172 has a cylindrically-shaped rotational shaft 174, and a magnet 176 disposed on the outer periphery of the rotational shaft 174. In this embodiment, the magnet 176 is magnetized at 24 poles.

Inside the rotational shaft 174, an internal space is formed that extends almost in the entire length of the motor unit 102. At a specific point on the inner periphery of the rotational shaft 174, a guide portion 178 which extends in parallel with the axis is provided. The guide portion 178 includes an elongated protrusion that extends in parallel with the axis, and forms a protrusion to be engaged with the rotation stopper which is described later.

The lower end of the rotational shaft 174 has a slightly reduced diameter, and four guide portions 180 that extend in parallel with the axis are provided on the inner periphery thereof. The guide portion 180 includes a pair of elongated protrusions that extends in parallel with the axis, and is provided on the inner periphery of the rotational shaft 174 every 90 degrees. The above-described four legs 160 of the valve operating element 134 are fitted into the four guide portions 180 so that the rotor 172 and the valve operating element 134 can rotate integrally. Note that the displacement in the rotational direction of the valve operating element 134 relative to the rotor 172 is limited, but the displacement thereof in the axial direction along the guide portion 180 is allowed. In other words, the valve operating element 134 is driven in the open/close direction of the valve element 132 while rotating with the rotor 172.

An elongated shaft 182 is disposed inside the rotor 172 along the axis thereof. The shaft 182 is fixed in a cantilever manner by the upper end thereof forcibly inserted into the center of the bottom of the sleeve 170, and is extended in parallel to the guide portion 178 within the internal space. The shaft 182 is arranged on the same axis as the valve operating element 134. To the shaft 182, a helical guide portion 184 is provided that extends almost in the entire length thereof. The guide portion 184 is made of a coiled member, and is fitted into the outer surface of the shaft 182. The upper end of the guide portion 184 is turned down to form a stopper 186.

A helical rotation stopper 188 is rotatably engaged with the guide portion 184. The rotation stopper 188 includes a helical engagement portion 190 that engages with the guide portion 184 and a power transmission portion 192 that is supported by the rotational shaft 174. The engagement portion 190 forms a single coil shape, and at the lower end thereof, the power transmission portion 192 that extends outward in the radius direction is provided in a linked manner. The tip of the power transmission portion 192 engages with the guide portion 178. In other words, the power transmission portion 192 abuts against one of the elongated protrusions of the guide portion 178, and is stopped in an engaged state. Therefore, the relative displacement the rotation stopper 188 in the rotational direction is limited by the rotational shaft 174, but the displacement thereof in the axial direction is allowed by sliding on the guide portion 178.

In other words, the rotation stopper 188 integrally rotates with the rotor 172, and the engagement portion 190 thereof is driven in the axis direction by being guided along the guide portion 184. Note that the range of drive in the axial direction of the rotation stopper 188 is limited by stoppers formed at both ends of the guide portion 178. The same figure shows the rotation stopper 188 positioned at the bottom dead center. When the rotation stopper 188 is displaced upward and engaged with the stopper 186, this position becomes the top dead center.

The rotor 172 is rotatably supported by the shaft 182 at the upper end, and the lower end is rotatably supported by the bearing portion 118. Specifically, a bottomed cylindrical edge member 194 is provided in a manner to seal tightly an upper end opening of the rotational shaft 174, and a cylindrical shaft 196 provided at the center of the edge member 194 is supported by the shaft 182. In other words, the bearing portion 118 serves as a bearing portion for one end, while a sliding portion with the cylindrical shaft 196 of the shaft 182 serves as a bearing portion for the other end.

The flow control valve 32 configured as above functions as a stepping motor-driven control valve, of which the valve-opening degree can be regulated by the drive control of the motor unit 102. The operation thereof is herein described in details.

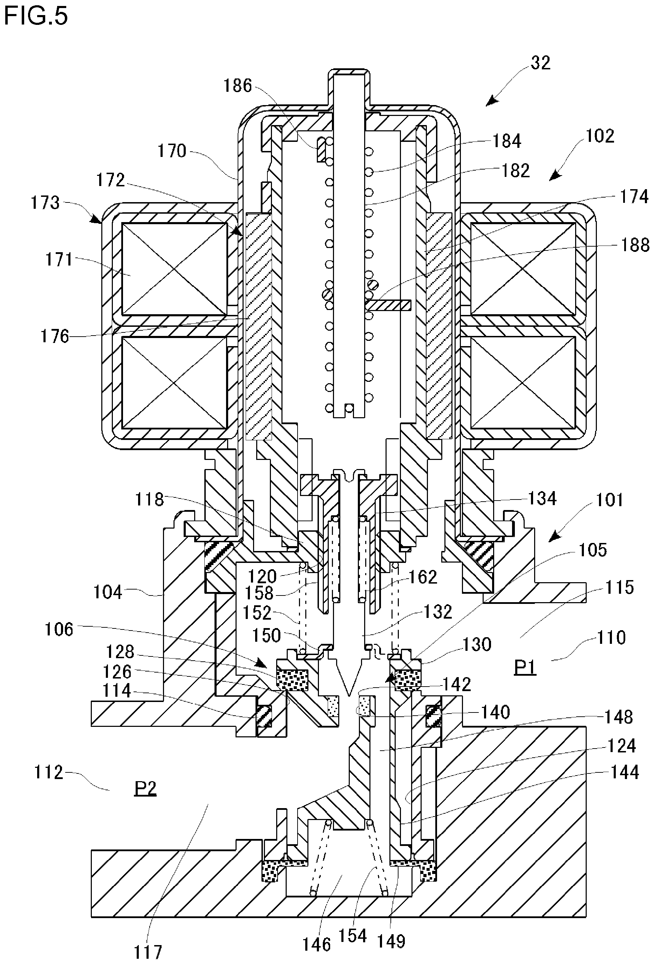

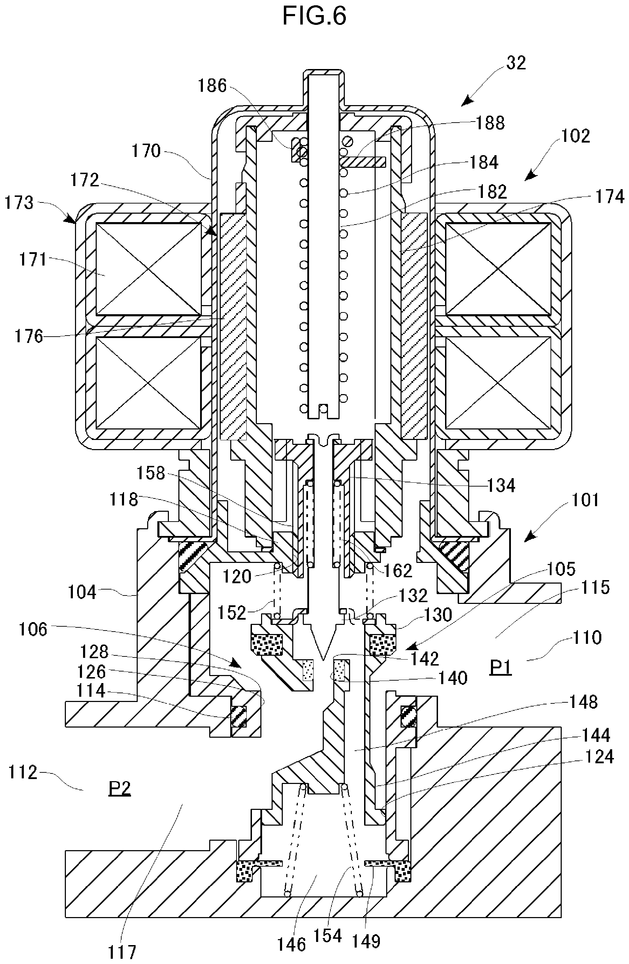

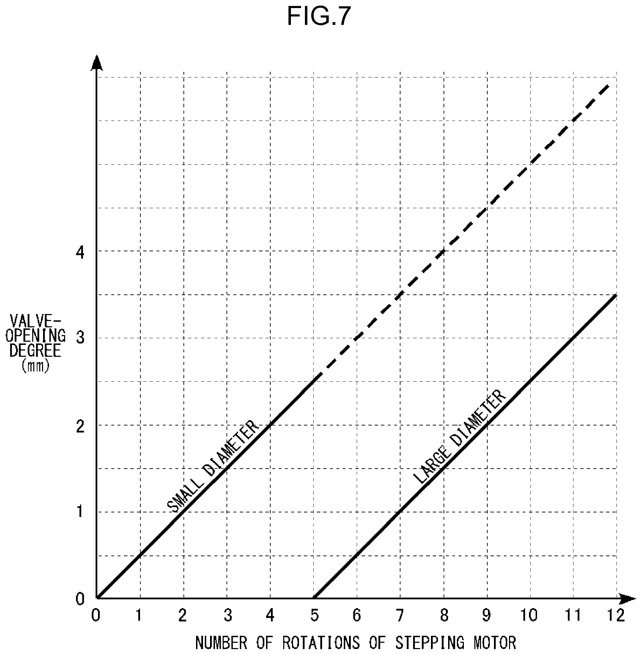

Figs. 5 and 6 are illustrations of the operating state of a flow control valve. Fig. 5 is an illustration of the first valve portion in a full-open state, and Fig. 6 is an illustration of the second valve portion in a full-open state. Fig. 3, described above, is an illustration of the first valve portion and the second valve portion in a closed state. Fig. 7 is a graph of the control state and the valve-opening degree of the flow control valve. In the figure, the horizontal axis shows the number of rotations (number of times) of the stepping motor in the valve-opening direction, and the vertical axis shows the valve-opening degree (a valve stroke in millimeters).

In the flow control at the flow control valve 32, the controller 100 calculates the number of drive steps of the stepping motor corresponding to the set opening degree, and supplies a drive current (drive pulse) to the exciting coil 171. Consequently, the rotor 172 is rotated, and on the one hand, the valve operating element 134 is rotary driven, and the opening degree of the small-diameter first valve portion and the large-diameter second valve portion is regulated to the set opening degree, and on the other hand, by the rotation stopper 188 driven along the guide portion 184, the range of movement of each valve element is limited.

Specifically, when executing a small-diameter control such as in a specific heating operation (see Fig. 2(B)), the valve element 132 is displaced in the valve-opening direction by the rotor 172 rotary driven in one direction (normal rotation), and the first valve portion is opened. Thus, the valve element 132 is driven in the range between a full-closed state shown in Fig. 3 and a full-open state shown in Fig. 5. Accordingly, the opening degree is changed as shown in Fig. 7. In this embodiment, the first valve portion is in a full-open state when the rotor 172 rotates five times from the closed state of the first valve portion. In the full-open state, the valve element 132 is lifted 2.5 mm (0.5 mm per rotation) from the valve seat 142. In the meantime, the valve-opening degree (valve stroke) of the small-diameter first valve portion is changed proportionately as shown in the figure. At this time, the rotation stopper 188 is also displaced upward in the same number of strokes.

When executing a large-diameter control such as in defrosting operation (see Fig. 2(C)), from the full-open state of the first valve portion as shown in Fig. 5, the rotor 172 is rotated further in the same direction (normal rotation). As a result, the valve element 130 is pulled upward by the valve element 132 and driven in the valve-opening direction. At this time, since the spring bearing member 150 serves as a stopper for stopping the valve element 132, the opening degree of the first valve portion (a full-open state) is maintained constantly. Conversely, since the spring bearing member 150 is pulled upward with the valve element 132, the valve element 130 is driven in the valve-opening direction by the urging force of the spring 154.

At this time, the valve element 130 is driven in the range between a full-closed state shown in Fig. 5 and a full-open state shown in Fig. 6. Accordingly, the opening degree is changed as shown in Fig. 7. In this embodiment, the second valve portion is in a full-open state when the rotor 172 rotates seven times from a closed state of the second valve portion (a full-open state of the first valve portion) In the full-open state, the valve element 130 is lifted 3.5 mm (0.5 mm per rotation) from the valve seat 128. In other words, as a result of the rotation stopper 188 being stopped with the stopper 186 at the top dead center, rotation of the rotor 172 is stopped. In the meantime, the valve-opening degree (valve stroke) of the large-diameter second valve portion is changed proportionally as shown in the figure. When the rotor 172 is rotated in the reverse direction, the valve element 130 and the valve element 132 operate in the valve-closing direction in a reverse order as the above. Since the number of rotations of the rotor 172 corresponds to the number of driving steps as a control command value, the controller 100 can control the flow control valve 32 to an arbitrary opening degree.

### [Second Embodiment]

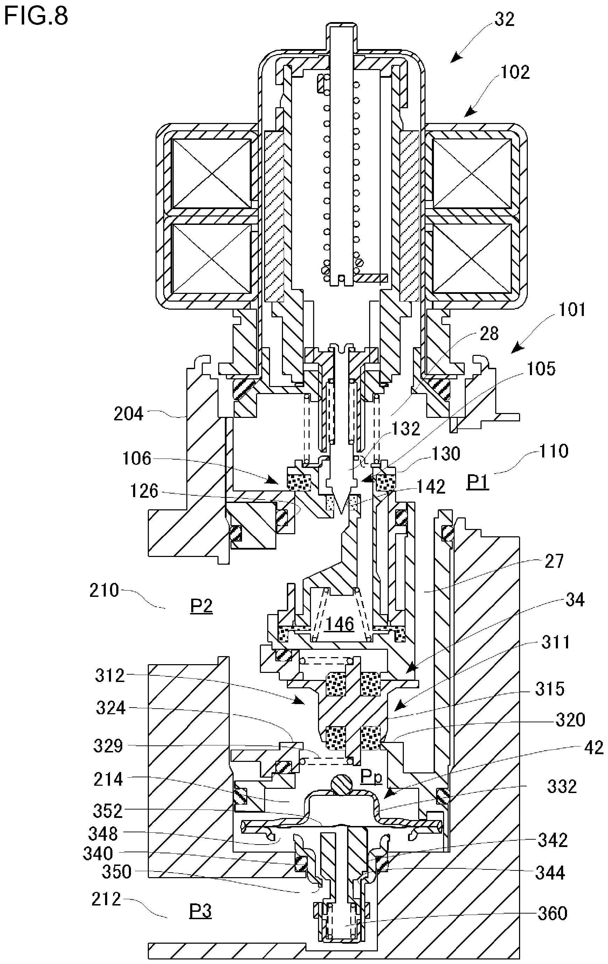

Next, a second embodiment of the present invention is described herein. A vehicle air conditioning system according to this embodiment is different from the one in the first embodiment in that the flow control valve 32, the selector valve 34, and the supercooling control valve 42 are configured integrally, but any other elements are common. Thus, the same reference numerals are used for constituent elements similar to those in the first embodiment, and descriptions thereof are omitted appropriately. Fig. 8 is a sectional view of a specific configuration of a compound valve according to a second embodiment.

A vehicle air conditioning system according to this embodiment is provided with a compound valve as shown in the figure, as a constituent element of a second control valve unit 6. This compound valve is provided by assembling a flow control valve 32, a selector valve 34, and a supercooling control valve 42 to a common body 204. The body 204 is provided with a lead-in port 110 communicating with a bypass passage 25, a lead-in/out port 210 communicating with the upstream side of a third passage 23, and a lead-out port 212 communicating with the downstream side of the third passage 23 (see Fig. 1). The structure of the flow control valve 32 is the same as in the first embodiment, so a description thereof is omitted.

The selector valve 34 is a three-way valve that includes a first valve portion 311 provided in a passage that communicates a first branch passage 27 with the lead-out port 212, and a second valve portion 312 provided in a passage that communicates the lead-in/out port 210 with the lead-out port 212, and further includes a common valve element 315 for opening/closing both of the valve portions. In other words, the common valve element 315 is provided with a valve hole 320 that communicates the first branch passage 27 with the lead-out port 212, and a valve hole 324 that communicates the lead-in/out port 210 with the lead-out port 212. The common valve element 315 opens/closes the first valve portion 311 by moving toward and away from the valve hole 320, and the common valve element 315 opens/closes the second valve portion 312 by moving toward and away from the valve hole 324. The valve holes 320 and 324 are provided concentrically on the same central axis.

The common valve element 315 is configured so that one end thereof is insertable to and removable from the valve hole 320, and the other end is insertable to and removable from the valve hole 324. One end of the common valve element 315 has an outer diameter nearly equal to the inner diameter of the valve hole 320. At the tip of the one end of the common valve element 315, a plurality of legs (only one leg is shown in the figure) runs that is slidably supported by the valve hole 320. The other end of the common valve element 315 has an outer diameter nearly equal to the inner diameter of the valve hole 324. At the tip of the other end of the common valve element 315, a plurality of legs (only one leg is shown in the figure) runs that is slidably supported by the valve hole 324.

Here, since effective diameters of the valve holes 320 and 324 are configured to be equal, an influence of the downstream pressure Pp acting on the common valve element 315 is cancelled. When the differential pressure before and after the valve or the differential pressure between the upstream pressure P1 and the intermediate pressure P2 (P1-P2) is larger than or equal to the set differential pressure ΔPset, the common valve element 315 maintains a state in which the first valve portion 311 is opened and the second valve portion 312 is closed. When the differential pressure before and after the valve (P1-P2) is smaller than the set differential pressure ΔPset, the common valve element 315 is moved to the right in the figure by the urging force of a spring 329, closes the first valve portion 311, and opens the second valve portion 312. The set differential pressure ΔPset is set by regulating the load of the spring 329.

The supercooling control valve 42 is provided in a passage 214 on the downstream side of the selector valve 34, and includes a valve portion for throttling and expanding the refrigerant introduced from the upstream side, and a power element 332 for opening/closing the valve portion. The supercooling control valve 42 is configured by housing a valve element 342 in a press-molded body 340. At the upper end of the body 340, the power element 332 is provided integrally. The lower half portion of the body 340 has a reduced diameter, and a valve hole 344 is formed in the diameter-reduced portion. In the upper half portion of the body 340, a lead-in port 348 for communicating inside with outside is provided, and in the lower half portion, a lead-out port 350 for communicating inside with outside is provided. The lower end of the body 340 is sealed tightly with a spring bearing to form a back-pressure chamber 360. Between the spring bearing and the valve element 342, a spring for urging the valve element 342 in the valve-opening direction is installed. The valve element 342 opens/closes the valve portion by moving toward and away from the valve hole 344 from the upstream side.

The power element 332 is configured to include a hollow housing and a diaphragm 352 disposed to separate the housing into a sealed space and an open space. The sealed space is filled with a gas mixture of a refrigerant gas (HFC-134a) circulating in the refrigeration cycle and a nitrogen gas, as a standard gas. An upper end surface of a valve element 342 comes into contact with an undersurface of the diaphragm 352. A communication passage is formed so as to pass through the valve element 342 in the axial direction, and the refrigerant introduced from the lead-in port 348 is also led to the back-pressure chamber 360 via the communication passage. In this embodiment, an effective diameter is set to be equal for the valve element 342 in the back-pressure chamber 360 and the valve hole 344, so the upstream pressure Pp acting on the valve element 342 is cancelled.

At the supercooling control valve 42, when the degree of supercooling is larger than the predetermined value SC in the supercooling control state, the power element 332 detects a low temperature and operates in the valve-opening direction. As a result, the upstream pressure Pp is lowered because the valve-opening degree becomes larger, and the supercooling changes in the direction of becoming smaller. Conversely, when the degree of supercooling becomes smaller than the predetermined value SC, the power element 332 detects a high temperature and operates in the valve-closing direction. As a result, the upstream pressure Pp becomes higher because the valve-opening degree becomes smaller, and the supercooling changes in the direction of becoming larger. In this manner, the degree of supercooling is maintained at a predetermined value SC.

Preferred embodiments of the present invention have been described above, but needless to say, the present invention is not limited to the specific embodiments, and different modifications are possible within the technical idea of the present invention.

In the above embodiments, as in Fig. 3, an example has been shown in which the guide portion 184 of the shaft 182 and the engagement portion 190 of the rotation stopper 188 are formed to be helical using a coiled member. In a modification, for example, a screw mechanism may be used in which the guide portion 184 of the shaft 182 is a male thread portion, and the engagement portion 190 of the rotation stopper 188 is a female thread portion. In other words, a mechanism for converting a rotation into a translation should be configured by both of the thread portions.

In the above embodiments, an example has been shown in which the vehicle air conditioning system of the present invention is applied to an electric vehicle, but needless to say, the air conditioning system can also be provided to a vehicle having an internal combustion engine and a hybrid-type vehicle having both an internal combustion engine and an electric motor. In the above embodiments, an example has been shown in which an electric compressor is used as the compressor 2, but a variable capacity compressor which varies the capacity using an engine revolution can also be used.

In the above embodiments, an example has been shown in which an internal condenser is provided as an auxiliary condenser. In a modification, the auxiliary condenser can also be configured to be a heat exchanger provided separately from an external heat exchanger. The heat exchanger, for example, can be arranged outside the vehicle interior, and can use engine cooling water for heat exchange. Specifically, for example, a heat exchanger may be provided between the compressor 2 and the flow control valve 32 in Fig. 1 while a radiator is arranged within the duct 10, and the heat exchanger and the radiator may be connected with a cooling water circulation circuit. The circulation circuit may be provided with a pump for pumping the cooling water. In this manner, heat exchange can be performed between a high-temperature refrigerant flowing from the compressor 2 to the flow control valve 32 and cooling water circulating in the circulation circuit. With such a configuration, the refrigerant discharged from the compressor 2 can be condensed by the heat exchanger, and supplied to the flow control valve 32.

### DESCRIPTION OF REFERENCE NUMERALS

1 vehicle air conditioning system, 2 compressor, 3 internal condenser, 4 first control valve unit, 5 external heat exchanger, 6 second control valve unit, 7 evaporator, 8 accumulator, 30 selector valve, 32 flow control valve, 34 selector valve, 42 supercooling control valve, 46 and 48 superheating control valve, 50 on-off valve, 100 controller, 101 valve main unit, 102 motor unit, 104 body, 105 first valve, 106 second valve, 110 lead-in port, 112 lead-out port, 115 high-pressure chamber, 116 compartment member, 117 low-pressure chamber, 118 bearing portion, 120 female thread portion, 124 guide hole, 126 valve hole, 128 valve seat, 130 and 132 valve element, 134 valve operating element, 140 valve hole, 142 valve seat, 144 compartment portion, 146 back-pressure chamber, 148 communication passage, 149 pressure-receiving regulation member, 156 stopper, 158 male thread portion, 170 sleeve, 171 exciting coil, 172 rotor, 173 stator, 174 rotational shaft, 176 magnet, 178 and 180 guide portion, 182 shaft, 184 guide portion, 188 rotation stopper, 190 engagement portion, 192 power transmission portion, 204 body, 210 lead-in/out port, 212 lead-out port, 311 first valve portion, 312 second valve portion, 315 common valve element, 320 and 324 valve hole, 332 power element, 340 body, 342 valve element, 344 valve hole, 348 lead-in port, 350 lead-out port, 352 diaphragm, and 360 back-pressure chamber.

## Claims

1. A stepping motor-driven control valve comprising:
a body (104) including a lead-in port (110) through which a refrigerant is introduced from the upstream side, a lead-out port (112) through which the refrigerant is delivered to the downstream side, and a valve hole (126) that connects the lead-in port (110) with the lead-out port (112) ;
a valve element (130) for opening/closing a valve portion (106) by moving toward and away from the valve hole (126);
a stepping motor (102) including a rotor (172) for driving the valve element (130) in a direction to open/close the valve portion (106);
a shaft (182) that is fixed to the body (104) and extended in an axial direction of the rotor (172),
a helical guide portion (184) that runs on an outer periphery of the shaft (182) along an axial direction thereof;
a rotation stopper (188) including an engagement portion (190) that engages along the guide portion (184) and a power transmission portion (192) supported by the rotor (172), the rotation stopper (188) being configured to be displaced in the axial direction of the shaft (182) with a rotation of the rotor (172), and to limit the rotation of the rotor (172) by the power transmission portion (192) being stopped at both ends of the shaft (182); and
a valve operating element (134) that is engaged with the rotor (172) and translationally supported in the axial direction as well as screwed into the body (104), and moves in the open/close direction of the valve portion (106) integrally with the valve element (130) by the rotation of the rotor (172), wherein
the rotor (172) is hollow-shaped and has bearing portions at both ends thereof, and
by the shaft (182) running into an internal space of the rotor (172), the rotation stopper (188) is configured to be displaced within the internal space, **characterised in that**
the valve operating element (134) is provided with legs (160) that are fitted into guide portions (180) of the rotor (172), and **in that** the valve operating element (134) is arranged such that displacement of the valve operating element (134) relative to the rotor (172) in rotational direction is limited, but displacement of the valve operating element (134) in axial direction along the guide portions (180) of the rotor (172) is allowed.

2. The control valve according to claim 1, wherein
the valve operating element (134) is arranged on the same axis as the shaft (182),
the bearing portion (118) on the one end of the rotor (172) is provided on the body (104,116) so as to be positioned outside a screwed area of the rotor (172) and the valve operating element (134), and
the bearing portion on the other end of the rotor is provided on the opposite end of the valve operating element on the shaft.

3. The control valve according to claim 1 or 2, comprising:
a first valve element (132) integrally operable with the valve operating element (134);
a second valve element (130) integrally operable with the first valve element (132);
a first valve hole (140) formed in the second valve element (130);
a second valve hole (126) formed in the body (104) and having a larger diameter than the first valve hole (140); and
an urging member (152) for urging the second valve element (130) in a valve-closing direction, wherein
a first valve portion (105) is opened/closed by the first valve element (1320) moving toward and away from the first valve hole (140),
while a second valve portion (106) is opened/closed by the second valve element (130) moving toward and away from the second valve hole (126), and
when the rotor (172) is rotated in one direction to displace the first valve element (132) and the first valve portion (105) is in a full-open state, the second valve element (130) is engaged with the first valve element (132), and the rotor (172) is further rotated in the same direction to open the second valve portion (106) by the second valve element (130) being pulled up by the first valve element (132).

4. The control valve according to claim 3, further comprising a cancel mechanism for cancelling an influence of an upstream pressure on the second valve element (130).

5. The control valve according to claim 4, comprising:
a compartment portion (144) that is linked to the second valve element (130) and forms a back-pressure chamber (146) between the body (104) and the compartment portion (144) on the downstream side of the second valve hole (126); and
a communication passage (148) through which an upstream pressure is introduced into the back-pressure chamber (146), wherein
the cancel mechanism is realized by equalizing an effective pressure-receiving area (A) of the second valve element (130) and an effective pressure-receiving area (B) of the compartment portion (144).

6. The control valve according to claim 5, comprising:
a valve member (136) including an elastic body and provided to the second valve element (130), the valve member (136) being configured to open/close the second valve portion (106) by attaching to and detaching from an opening edge on the upstream side of the second valve hole (126); and
a pressure-receiving regulation member (149) including an elastic body and provided to the back-pressure chamber (146), the pressure-receiving regulation member (149) being configured to come into close contact with the compartment portion (144) to increase the effective pressure-receiving area (B) thereof when the second valve portion (106) is in the closed state.

7. The control valve according to any of claims 3 to 6, wherein
the first valve element (132) is supported by the valve operating element (134) such that, when the first valve portion (105) is opened, the first valve element (132) is integrally operable with the valve operating element (134), and when the first valve portion (105) is closed, the first valve element (132) is displaceable relative to the valve operating element (134).

## Patentansprüche

1. Schrittmotorangetriebenes Steuerventil, umfassend:
einen Körper (104) mit einer Einlassöffnung (110), durch die ein Kältemittel von der stromaufwärts befindlichen Seite eingeleitet wird, einer Auslassöffnung (112), durch die das Kältemittel zur stromabwärts befindlichen Seite geleitet wird, sowie ein Ventilloch (126), das die Einlassöffnung (110) mit der Auslassöffnung (112) verbindet;
ein Ventilelement (130) zum Öffnen/Schließen eines Ventilabschnitts (106) durch Bewegen hin zum und weg vom Ventilloch (126);
einen Schrittmotor (102) mit einem Rotor (172) zum Antreiben des Ventilelements (130) in einer Richtung, um den Ventilabschnitt (106) zu öffnen/zu schließen;
eine Welle (182), die am Körper (104) fixiert ist und sich in einer axialen Richtung des Rotors (172) erstreckt;
einen spiralförmigen Führungsabschnitt (184), der auf einem Außenumfang der Welle (182) entlang einer axialen Richtung davon läuft;
einen Drehanschlag (188) mit einem Eingriffsabschnitt (190), der entlang des Führungsabschnitts (184) eingreift, und mit einem vom Rotor (172) abgestützten Kraftübertragungsabschnitt (192), wobei der Drehanschlag (188) konfiguriert ist, um in der axialen Richtung der Welle (182) mit einer Drehung des Rotors (172) verschoben zu werden und die Drehung des Rotors (172) durch den Kraftübertragungsabschnitt (192) mittels Stoppen an beiden Enden der Welle (182) zu begrenzen; und
ein Ventilbetätigungselement (134), das mit dem Rotor (172) in Eingriff steht und in der axialen Richtung translatorisch abgestützt wird und in den Körper (104) eingeschraubt ist, und das sich in der Öffnen/Schließ-Richtung des Ventilabschnitts (106) integral mit dem Ventilelement (130) durch die Drehung des Rotors (172), wobei der Rotor (172) hohlgeformt ist und an beiden Enden davon Lagerabschnitte aufweist, sowie durch die in einen Innenraum des Rotors (172) hinein verlaufende Welle (182) bewegt, wobei der Drehanschlag (188) so konfiguriert ist, dass er innerhalb des Innenraums verschoben werden kann,
**dadurch gekennzeichnet, dass**
das Ventilbetätigungselement (134) mit Schenkeln (160) ausgestattet ist, die in Führungsabschnitte (180) des Rotors (172) eingepasst sind, und dass das Ventilbetätigungselement (134) so angeordnet ist, dass ein Verschieben des Ventilbetätigungselements (134) im Verhältnis zum Rotor (172) in Drehrichtung begrenzt ist, jedoch ein Verschieben des Ventilbetätigungselements (134) in axialer Richtung entlang den Führungsabschnitten (180) des Rotors (172) zugelassen wird.

2. Steuerventil nach Anspruch 1, wobei das Ventilbetätigungselement (134) auf derselben Achse wie die Welle (182) angeordnet ist, wobei der Lagerabschnitt (118) an dem einen Ende des Rotors (172) so am Körper (104, 116) vorgesehen ist, dass er außerhalb einer schraubenförmigen Fläche des Rotors (172) und des Ventilbetätigungselements (134) positioniert ist, und wobei der Lagerabschnitt am anderen Ende des Rotors am gegenüberliegenden Ende des Ventilbetätigungselements auf der Welle vorgesehen ist.

3. Steuerventil nach Anspruch 1 oder 2, umfassend:
ein erstes Ventilelement (132), das sich integral mit dem Ventilbetätigungselement (134) betätigen lässt;
ein zweites Ventilelement (130), das sich integral mit dem ersten Ventilelement (132) betätigen lässt;
ein erstes Ventilloch (140), das im zweiten Ventilelement (130) ausgebildet ist;
ein zweites Ventilloch (126), das im Körper (104) ausgebildet ist und einen größeren Durchmesser als das erste Ventilloch (140) hat; und
ein druckausübendes Element (152), um das zweite Ventilelement (130) in eine Ventil-Schließ-Richtung zu drängen, wobei ein erster Ventilabschnitt (105) durch das erste Ventilelement (1320) durch Bewegen hin zum und weg vom ersten Ventilloch (140) geöffnet/geschlossen wird, während ein zweiter Ventilabschnitt (106) durch das zweite Ventilelement (130) durch Bewegen hin zum und weg vom zweiten Ventilloch (126) geöffnet/geschlossen wird, wobei, wenn der Rotor (172) in einer Richtung gedreht wird, um das erste Ventilelement (132) zu verschieben, und sich der erste Ventilabschnitt (105) in einem vollständig geöffneten Zustand befindet, das zweite Ventilelement (130) in das erste Ventilelement (132) eingreift, und wobei der Rotor (172) weiter in derselben Richtung gedreht wird, um den zweiten Ventilabschnitt (106) zu öffnen, indem das zweite Ventilelement (130) vom ersten Ventilelement (132) hochgezogen wird.

4. Steuerventil nach Anspruch 3, weiterhin umfassend:
einen Aufhebungsmechanismus, um eine Auswirkung eines Eingangsdrucks auf das zweite Ventilelement (130) aufzuheben.

5. Steuerventil nach Anspruch 4, umfassend:
einen Kammerabschnitt (144), der mit dem zweiten Ventilelement (130) verbunden ist und eine Gegendruckkammer (146) zwischen dem Körper (104) und dem Kammerabschnitt (144) auf der stromabwärts befindlichen Seite des zweiten Ventillochs (126) bildet; und
ein Verbindungsdurchgang (148), durch den ein Eingangsdruck in die Gegendruckkammer (146) eingeleitet wird, wobei der Aufhebungsmechanismus bewirkt, dass eine Wirkdruckaufnahmefläche (A) des zweiten Ventilelements (130) und eine Wirkdruckaufnahmefläche (B) des Kammerabschnitts (144) ausgeglichen werden.

6. Steuerventil nach Anspruch 5, umfassend:
ein Ventilteil (136) mit einem elastischen Körper, das für das zweite Ventilelement (130) vorgesehen ist, wobei das Ventilteil (136) konfiguriert ist, um den zweiten Ventilabschnitt (106) durch Anfügen an bzw. Lösen von einer Öffnungskante auf der stromaufwärts befindlichen Seite des zweiten Ventillochs (126) zu öffnen/zu schließen; und
ein Druckaufnahmeregulierteil (149) mit einem elastischen Körper, das für die Gegendruckkammer (146) vorgesehen ist, wobei das Druckaufnahmeregulierteil (149) konfiguriert ist, um in engen Kontakt mit dem Kammerabschnitt (144) zu kommen, um die Wirkdruckaufnahmefläche (B) davon zu vergrößern, wenn sich der zweite Ventilabschnitt (106) im geschlossenen Zustand befindet.

7. Steuerventil nach einem der Ansprüche 3 bis 6, wobei das erste Ventilelement (132) durch das Ventilbetätigungselement (134) so abgestützt wird, dass sich, wenn der erste Ventilabschnitt (105) geöffnet ist, das erste Ventilelement (132) integral mit dem Ventilbetätigungselement (134) betätigen lässt, und dass sich, wenn der erste Ventilabschnitt (105) geschlossen ist, das erste Ventilelement (132) im Verhältnis zum Ventilbetätigungselement (134) verschieben lässt.

## Revendications

1. Soupape de commande entraînée par moteur pas à pas, comprenant:
un corps (104) comprenant un port d'entrée (110) à travers lequel un réfrigérant est introduit à partir du côté amont, un port de sortie (112) à travers lequel le réfrigérant est délivré vers le côté aval, et un trou de soupape (126) qui met en communication le port d'entrée (110) avec le port de sortie (112);
un élément de soupape (130) pour ouvrir/fermer une partie de soupape (106) en se déplaçant en direction et à l'écart du trou de soupape (126);
un moteur pas à pas (102) comprenant un rotor (172) pour entraîner l'élément de soupape (130) dans une direction afin d'ouvrir/fermer la partie de soupape (106);
un arbre (182) qui est fixé au corps (104) et qui s'étend dans une direction axiale du rotor (172),
une partie de guidage hélicoïdale (184) qui s'étend sur une périphérie extérieure de l'arbre (182) le long d'une direction axiale de celui-ci;
un dispositif d'arrêt de rotation (188) comprenant une partie d'engagement (190) qui s'engage le long de la partie de guidage (184) et une partie de transmission de puissance (192) supportée par le rotor (172), le dispositif d'arrêt de rotation (188) étant configuré de manière à être déplacé dans la direction axiale de l'arbre (182) avec une rotation du rotor (172), et à limiter la rotation du rotor (172) par la partie de transmission de puissance (192) qui est arrêtée aux deux extrémités de l'arbre (182); et
un élément d'actionnement de soupape (134) qui est engagé avec le rotor (172) et qui est supporté de façon translationnelle dans la direction axiale ainsi que vissée dans le corps (104), et qui se déplace dans la direction d'ouverture/fermeture de la partie de soupape (106) intégralement avec l'élément de soupape (130) par la rotation du rotor (172),
dans lequel le rotor (172) est creux et présente des parties de support aux deux extrémités de celui-ci, et
avec l'arbre (182) qui s'étend dans un espace interne du rotor (172), le dispositif d'arrêt de rotation (188) est configuré de manière à être déplacé à l'intérieur de l'espace interne,
**caractérisé en ce que** l'élément d'actionnement de soupape (134) est pourvu de branches (160) qui sont agencées dans des parties de guidage (180) du rotor (172), et **en ce que** l'élément d'actionnement de soupape (134) est agencé de telle sorte qu'un déplacement de l'élément d'actionnement de soupape (134) par rapport au rotor (172) dans le sens de rotation soit limité,
mais qu'un déplacement de l'élément d'actionnement de soupape (134) dans une direction axiale le long des parties de guidage (180) du rotor (172) soit autorisé.

2. Soupape de commande selon la revendication 1, dans lequel:
l'élément d'actionnement de soupape (134) est agencé sur le même axe que l'arbre (182),
la partie de support (118) sur une première extrémité du rotor (172) est prévue sur le corps (104, 116) de manière à être positionnée à l'extérieur d'une région vissée du rotor (172) et de l'élément d'actionnement de soupape (134), et
la partie de support sur l'autre extrémité du rotor est prévue sur l'extrémité opposée de l'élément d'actionnement de soupape sur l'arbre.

3. Soupape de commande selon la revendication 1 ou 2, comprenant:
un premier élément de soupape (132) actionnable intégralement avec l'élément d'actionnement de soupape (134);
un second élément de soupape (130) actionnable intégralement avec le premier élément de soupape (132);
un premier trou de soupape (140) formé dans le second élément de soupape (130);
un second trou de soupape (126) formé dans le corps (104) et présentant un plus grand diamètre que le premier trou de soupape (140); et
un élément de poussée (152) pour pousser le second élément de soupape (130) dans une direction de fermeture de soupape,
dans lequel:
une première partie de soupape (105) est ouverte/fermée par le premier élément de soupape (1320) qui se déplace en direction et à l'écart du premier trou de soupape (140), alors qu'une seconde partie de soupape (106) est ouverte/fermée par le second élément de soupape (130) qui se déplace en direction et à l'écart du second trou de soupape (126), et
lorsque le rotor (172) est mis en rotation dans une direction afin de déplacer le premier élément de soupape (132) et que la première partie de soupape (105) se trouve dans un état complètement ouvert, le second élément de soupape (130) est engagé avec le premier élément de soupape (132), et le rotor (172) est en outre mis en rotation dans la même direction afin d'ouvrir la seconde partie de soupape (106) par le second élément de soupape (130) qui est tiré par le premier élément de soupape (132).

4. Soupape de commande selon la revendication 3, comprenant en outre un mécanisme d'annulation pour annuler une influence d'une pression amont sur le second élément de soupape (130).

5. Soupape de commande selon la revendication 4, comprenant:
une partie de compartiment (144) qui est reliée au second élément de soupape (130) et qui forme une chambre de contre-pression (146) entre le corps (104) et la partie de compartiment (144) sur le côté aval du second trou de soupape (126); et
un passage de communication (148) à travers lequel une pression amont est introduite dans la chambre de contre-pression (146),
dans lequel le mécanisme d'annulation est réalisé en égalisant une région de réception de pression effective (A) du second élément de soupape (130) et une région de réception de pression effective (B) de la partie de compartiment (144).

6. Soupape de commande selon la revendication 5, comprenant:
un élément de soupape (136) comprenant un corps élastique et prévu sur le second élément de soupape (130), l'élément de soupape (136) étant configuré de manière à ouvrir/fermer la seconde partie de soupape (106) en s'attachant à et en se détachant d'un bord d'ouverture sur le côté amont du second trou de soupape (126); et
un élément de régulation de réception de pression (149) comprenant un corps élastique et prévu sur la chambre de contre-pression (146), l'élément de régulation de réception de pression (149) étant configuré de manière à entrer en contact étroit avec la partie de compartiment (144) afin d'accroître la région de réception de pression effective (B) de celle-ci lorsque la seconde partie de soupape (106) se trouve dans l'état fermé.

7. Soupape de commande selon l'une quelconque des revendications 3 à 6, dans lequel le premier élément de soupape (132) est supporté par l'élément d'actionnement de soupape (134) de telle sorte que, lorsque la première partie de soupape (105) est ouverte, le premier élément de soupape (132) soit intégralement actionnable avec l'élément d'actionnement de soupape (134), et lorsque la première partie de soupape (105) est fermée, le premier élément de soupape (132) soit déplaçable par rapport à l'élément d'actionnement de soupape (134).
